(19) Europäisches Patentamt European Patent Office Office européen des brevets

(11) **EP 2 413 106 A1**

(12) **EUROPEAN PATENT APPLICATION**

(43) Date of publication:
**01.02.2012 Bulletin 2012/05**

(51) Int Cl.:
*G01F 1/00* (2006.01)     *A47L 15/42* (2006.01)
*D06F 39/00* (2006.01)     *D06F 39/08* (2006.01)
*D06F 41/00* (2006.01)

(21) Application number: **11175938.7**

(22) Date of filing: **29.07.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **29.07.2010 IT TO20100659**

(71) Applicant: **Indesit Company S.p.A.
60044 Fabriano (AN) (IT)**

(72) Inventors:
• **Mariotti, Costantino
06028 Sigillo (PG) (IT)**
• **Fontana, Claudio
60044 Fabriano (AN) (IT)**

(74) Representative: **Santonicola, Paolo
Indesit Company S.p.A.
Industrial Property Management Team
Via Lamberto Corsi, 55
60044 Fabriano (AN) (IT)**

(54) **Method for measuring the water flow rate in a washing machine**

(57)     The present invention relates to a method for measuring the flow rate of water supplied to a washing machine (1), wherein: water is supplied into the tub (2, 2b) of the washing machine (1), the reaching of two water levels (12, 13; L2, L4) is detected through a linear pressure switch (9), wherein the two water levels (12, 13; L2, L4) are lower than a predetermined level (2c), a time is measured which is dependent on the reaching of the first one (12, L2) and of the second one (13, L4) of the two levels (12, 13; L2, L4), the water flow rate is calculated as a ratio between a water volume dependent on the two detected levels (12, 13; L2, L4) and the measured time.

Fig. 2

EP 2 413 106 A1

**Description**

[FIELD OF THE INVENTION]

The present invention relates to the field of washing machines, in particular to a method for measuring the water flow rate in a washing machine.

[PRIOR ART]

In known washing machines, during some laundry washing steps it is necessary that water is supplied into the wash tub. Typically, this water is taken from the domestic water mains, and the intake water flow is controlled by a solenoid valve. The water intake step is called "supply step".

Washing machines are known which measure the flow rate of the water supplied into the tub. In this case, the washing machine comprises a pressure switch adapted to detect when the water supplied into the tub reaches a predetermined upper level, at which a part of the inner volume of the drum is flooded. The washing machine can also count the time that elapses between the opening of the solenoid valve (i.e. when filling starts) and the "full" signal issued by the pressure-switch (i.e. when said predetermined upper level is reached and the water supply stops).

The washing machine thus calculates the water supply time and, knowing also the quantity of water to be supplied in order to reach the level at which the pressure switch changes state, the washing machine control can determine the mean water flow rate during the water supply step.

Although economical, this solution suffers from the drawback that it is not very accurate. As a matter of fact, during the supply step situations may occur where the above-described water flow rate measuring method cannot lead to satisfactory results.

For instance, once the supplied water has risen above the bottom surface of the drum, the laundry contained therein begins to get imbibed with water; this water is retained in the laundry and does not contribute to the total water level detected by the pressure switch. It is therefore possible that this method leads to underestimating the water flow rate, to an extent that depends on the quantity of water imbibed in the laundry. It follows that the flow rate measurement is adversely affected by factors such as the quantity of laundry items placed in the drum and/or the different types of fabrics, which may have different water absorption characteristics.

Furthermore, for example, should any malfunctions occur during the water supply step caused by the solenoid valve or by the domestic water mains, there might be water flow rate fluctuations which would not be detected with this method, which only takes into account the overall mean flow rate.

[OBJECTS AND SUMMARY OF THE INVENTION]

The object of the present invention is to provide a method for measuring the flow rate of water supplied to a washing machine, which overcomes some of the problems suffered by the prior art.

In particular, it is one obj ect of the present invention to provide a more accurate method for measuring the water flow rate.

It is another object of the present invention to provide a water flow rate measuring method which is always effective, whether in the typical operating conditions of a washing machine or in the presence of irregular water flow conditions.

These and other objects of the present invention are achieved through a method for measuring the water flow rate in a washing machine incorporating the features set out in the appended claims, which are intended as an integral part of the present description.

The general idea at the basis of the present invention is to provide a method for measuring the water flow rate in a washing machine comprising a tub and a linear pressure switch. The method provides for: supplying water into the tub; detecting, by means of the linear pressure switch, the reaching of at least two water levels in the tub, both of which being below the lowest point of the drum; and measuring a time which is dependent on the reaching of the two levels. According to this method, the flow rate measurement is calculated by dividing the water volume supplied between the two levels by the measured time.

This solution overcomes the drawbacks of the prior art, in that it allows the water flow supplied into the tub to be measured accurately, since during the measurement step no water is absorbed by the laundry in the drum.

Preferably, the water level readings are taken at instants in which the solenoid valve is closed and substantially no water is let into the tub. This ensures more accurate measurements, which lead to a more accurate calculation of the water flow rate.

Preferably, it is possible to take a plurality of measurements of the water level and of the time elapsed between each measurement; this allows to evaluate any variations in the water flow rate during the supply step.

Furthermore, preferably, the first measured level is higher than the initial level corresponding to an empty tub; it is thus possible to take a measurement which is not disturbed by any water remaining in the tub at the end of the previous operating cycle due to incomplete draining.

Advantageously, the present method can be implemented in a commercial washing machine without requiring any additional components for measuring the water flow rate, since it uses elements which are typically already present in the machine. It does not therefore increase the production cost of the washing machine and of the devices associated therewith for measuring the water flow rate.

Further objects and advantages of the present invention will become more apparent from the following detailed description.

[BRIEF DESCRIPTION OF THE DRAWINGS]

Some preferred and advantageous embodiments of the present invention will now be described by way of non-limiting example with reference to the annexed drawings, wherein:

- Fig. 1 shows one embodiment of a washing machine incorporating the method according to the present invention.
- Fig. 2 shows a detailed illustration of the pressure switch and a diagrammatic view of the tub of the washing machine of Fig. 1.
- Fig. 3 shows a time line that illustrates the succession of the measurement steps in accordance with the present invention for a particular example of progress of the water load in the tub.

The above-mentioned drawings show different aspects and embodiments of the present invention and, where appropriate, similar structures, components, materials and/or elements in the various drawings are designated by the same reference numerals.

[DETAILED DESCRIPTION OF THE INVENTION]

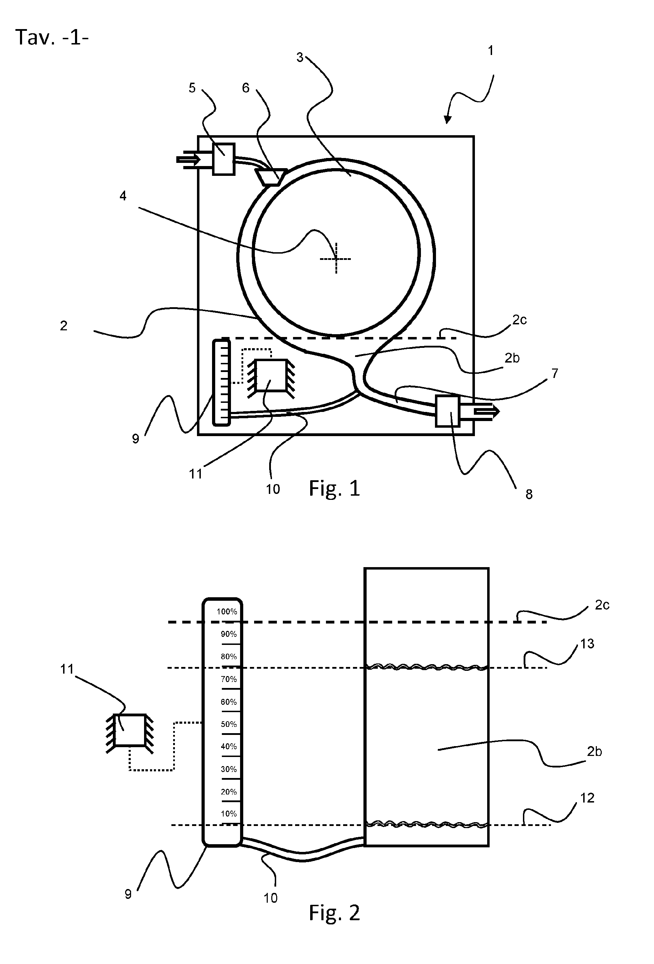

Fig. 1 diagrammatically shows one embodiment of a washing machine 1 incorporating the method according to the present invention. The term "washing machine" refers herein to any machine capable of performing at least one wash treatment on textile items, e.g. washing and/or washing/drying machines.

This washing machine 1 comprises a wash tub 2 in which there is a drum 3 adapted to contain laundry to be washed. The drum 3 is rotated about the axis 4 by the torque transmitted by an electric motor (not shown).

During the wash step, when the drum 3 is rotating, the laundry items contained therein are stirred and, through holes in the drum 3 (not shown), they come in contact with the wash liquid collected in the tub 2; the laundry contained in the drum is thus imbibed and washed. The wash liquid typically comprises water and a mixture of detergents; the water intake is controlled by a solenoid valve 5 that lets in water coming from the domestic water mains; this water is typically mixed with a detergent inside a hopper 6 before entering into the tub 2. Since said water represents the prevailing fraction of the wash liquid, in the present description the generic term "water" will be used to indicate both the wash liquid in the tub and the liquid supplied from the outside through the domestic water mains.

Once the laundry washing step has been completed, a draining step is carried out wherein the water is carried by the drain duct 7 to the drain pump 8 and is then expelled from the washing machine.

As the water is being supplied into the tub, the water level rises in the lower portion 2b of the tub 2, until it typically reaches a level 2c of the surface of the drum 3 containing the laundry to be washed. The level 2c is predetermined, and is preferably tangential to the outer surface of the drum 3.

The level of the water accumulated in the portion 2b is detected by a sensor, e.g. a linear pressure switch 9 communicating with the lower portion 2b of the tub 2 via the duct 10. The pressure switch 9 can detect the pressure generated by the water column accumulated in the portion 2b, and can therefore determine the height thereof with great accuracy.

The washing machine 1 also comprises additional elements and devices, such as, for example, a drum access door, a detergent compartment or the like, which are neither shown in the drawing nor described herein because they are per se known. It should therefore be assumed that a washing machine according to the present invention may comprise all such devices not shown in the drawings, which are considered to be prior art.

The sensor 9 is also connected to a control unit 11 which comprises a microcontroller capable of receiving information from the linear pressure switch 9. In order to reduce the number of apparatuses included in the washing machine, this control unit 11 may additionally comprise, for example, a memory area containing, among other things, the laundry treatment operating programs, and may be adapted to control the general operation of the washing machine as well as the proper succession of the various laundry treatment steps. The microcontroller of the control unit 11 is of a type also implementing a timer functionality, and can therefore take duration measurements with great accuracy.

The washing machine 1 can thus utilize the method according to the present invention to measure the flow rate of the supplied water as described in detail below.

Fig. 2 shows the linear pressure switch 9 that measures the water level in the portion 2b of the tub. During the water supply step, the water level in the portion 2b rises at a speed that depends on the flow rate of the water being supplied. The water flow rate is typically expressed as a volume per time unit, e.g. litres per minute [l/min].

According to the present invention, when water starts being supplied into the tub portion 2b to reach the predetermined level 2c, the water level (which varies over time) is measured by the pressure switch 9.

According to a first embodiment of the present invention, the linear pressure switch 9 measures, at a first time instant, a first level 12 of the water contained in the portion 2b. The linear pressure switch 9 is therefore adapted to signal to the control unit 11 the reaching of this first water level 12; the control unit 11 thus detects the first time instant at which this occurs.

Subsequently, the water level in the portion 2b rises, and the linear pressure switch 9 measures, at a second time instant, a second water level 13. Again, the linear pressure switch 9 signals to the control unit 11 the reaching of this second water level, and the control unit detects the second time instant.

The control unit 11 then measures the time elapsed between the two readings of the first level 12 and of the second level 13. Also, the water volume supplied between these two time instants is known from the difference between the water volume at the second level 13 and the water volume at the first level 12; these values are known from the design specifications of the shape of the tub 2. In the example of Fig. 2, for simplicity, the portion 2b is shown as a volume having a parallelepipedon shape; it is however clear that such a simple design cannot be found in a commercial washing machine, where the tub is suitably modelled. After the design stage, it is however easy to establish a correspondence between the reading of the linear pressure switch 9 and the water volume contained in the tub at the time of said reading.

According to the method of the present invention, it is therefore possible to measure the flow rate of the water supplied into the tub portion 2b through two successive water level readings taken by the linear pressure switch 9, by dividing the water volume supplied between the reaching of the first level 12 and the reaching of the second level 13 by the time elapsed between the two readings.

Preferably, the level 13 is lower than the predetermined level 2c that must be reached at the end of the water supply step. It is thus possible to take the measurement at a stage in which the laundry contained in the drum 3 is not yet in contact with the water and therefore not yet imbibed, thereby avoiding the flow rate underestimate error previously described and improving the accuracy of the measurement.

Furthermore, the level 12 is preferably higher than the "empty" level at which there is no water in the tub. In this way it is possible to exclude from the measurement the interfering input of any water (typically a few centilitres) remaining in the tub at the end of the previous operating cycle due to incomplete draining. For a household washing machine, the first level 12 is preferably such that it is reached when in the tub there is a water volume between 5% and 20%, more preferably 10%, of the total volume of water to be supplied. However, the method according to the present invention proves to be substantially reliable even when the "empty" level is used as a first level 12.

Likewise, it is preferable that the second level 13 is such that it is reached when in the tub there is a water volume between 70% and 90%, more preferably 80%, of the total volume of water to be supplied.

The water volume contained in the tub portion 2b is typically between 1 and 1.3 litres, e.g. approx. 1.2 litres.

This method ensures an accurate measurement of the flow rate of the water supplied into the tub, since it uses more effectively the detections of sensors included in the washing machine, such as the linear pressure switch 9.

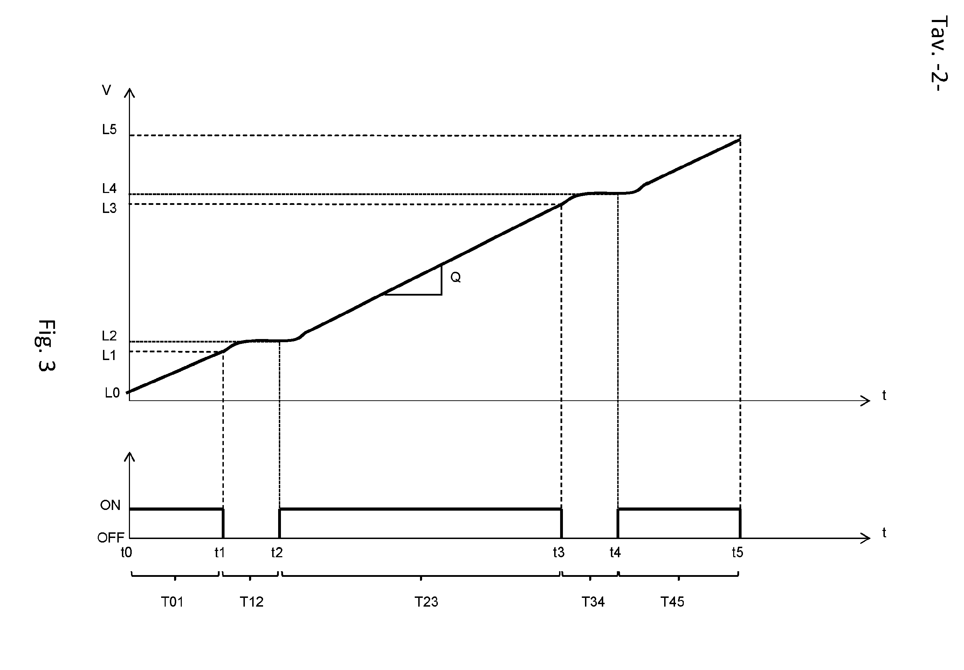

Fig. 3 shows the temporal succession of the flow rate measuring steps according to a further embodiment of the present invention.

In this particular example, the first graph shows the progress over time t of the water volume V supplied into the lower portion 2b of the tub 2; the second graph shows the on/off state changes of the solenoid valve 5 over time t, highlighting the "open" (different from 0) or "closed" (equal to 0) states of the solenoid valve 5 that controls the intake of water in the washing machine 1. As can be seen in these graphs, at the instant t0 water starts being supplied into the tub 2 as the solenoid valve 5 opens. At the instant t0, in the lower portion 2b there may already be a quantity of water corresponding to a starting level L0. Therefore, after the instant t0 the volume V increases, following an initial transient, until it reaches a first control level L1 after a duration T01.

As soon as the first control level L1 is reached, as detected by the linear pressure switch 9, i.e. at the instant t1, the washing machine's control means 11 temporarily close the solenoid valve 5 for a predetermined time T12, until the instant t2.

The time T12 elapsed between the instants t1 and t2 is sufficient to cause the path between the solenoid valve 5 and the lower portion 2b (in particular the internal hoses of the washing machine 1, not fully shown in Fig. 1) to be drained of most of the water previously taken in. Thus, between the instants t1 and t2 the hoses will be drained and the water will get into the tub, thereby reaching the measurement level L2. The water accumulated in the hoses and in the hopper of the washing machine is typically 200 ml.

According to the present invention, at the time instant t2 the linear pressure switch detects the first measurement level L2 (i.e. the level 12 of Fig. 2).

According to this embodiment, the control level L1 is preferably such that it is reached when in the tub there is a water volume between 5% and 20% of the total volume of water to be supplied, more preferably 0.11.

Once the measurement level L2 has been detected, the control means 11 open the solenoid valve 5, thus resuming the water supply. The volume V will thus increase until the water reaches, after a time T23, i.e. at the instant t3, a second control level L3, detected by the linear pressure switch 9. At the instant t3, the washing machine's control means 11 temporarily close the solenoid valve 5 again for a predetermined time T34, until the instant t4.

Also the duration T34 elapsing between the instants t3 and t4 is such as to allow the washing machine's supply path to be drained, and is preferably equal to the previous duration T12. Thus, at the time instant t4 the water contained in the tub will reach a second measurement level L4 (i.e. the level 13 of Fig. 2). Preferably, the duration of both of these interruptions T12 and T34 is 5 seconds.

Both the measurement level L2 and the measurement level L4 have the property of being supply levels which are reached asymptotically, wherein the water level in the tub 2b is temporarily stable. In this way, according to the present invention, it is possible to detect the water level in the tub with better accuracy, leading to the advantage of a better precision of the water flow rate measurement. In fact, in this second embodiment the level detection is carried out by the linear pressure switch during the pauses in the water supply process, thereby providing a more stable and accurate reading of the level and hence of the supplied volume.

According to this embodiment, the control level L3 is preferably such that it is reached when in the tub there is a water volume between 70% and 90% of the total volume of water to be supplied, more preferably 0,81.

At the instant t4, the linear pressure switch 9 detects the level L4 reached in the tub. Once the level L4 has been detected, the control means 11 open the solenoid valve 5 again, thus resuming the water supply until the level L5 (i.e. the level 2c) is reached, that is, after the time T45, thus letting in an additional water quantity that partially floods the inner volume of the drum, up to the level corresponding to the "full" condition of the pressure switch.

In order to obtain a precise measurement of the water flow rate Q (usually expressed in l/min), it is necessary not only to accurately detect two measurement levels (in this case, the level L2 and the level L4), but also to accurately detect the reference time interval in which the water has been supplied.

A particularly advantageous mode of measuring the water flow rate will now be described. As aforementioned with reference to Fig. 2, the water volume supplied between the time instants is known from the difference between the water volumes at the various levels detected, the values of which are known from the design specifications of the tub 2 because they depend on the shape of the tub 2.

Therefore, according to the present invention, the water flow rate Q is calculated as the water volume supplied between the levels L2 and L4 divided by the time T23 elapsed between the instants t3 and t2, corrected by a parameter K:

$$Q = (VL4-VL2)/(t3-t2+K)$$

In other words:

$$Q = (VL4-VL2)/(T23+K)$$

In this regard, the water flow rate Q calculated as said incremental ratio is a good estimate of the actual water flow rate supplied by the solenoid valve 5, as exemplified in Fig. 3.

The corrective parameter K is a constant determined during the washing machine design stage; said parameter K takes into account the water falling into the tub between the time instants t3 and t4 (during the time T34), and possibly also the transient occurring immediately after the instant t2 when the solenoid valve 5 reopens; it is therefore expressed in seconds.

In the commercial embodiment of the washing machine according to the present invention, it is conceivable that the flow rate is not necessarily obtained by calculating the above-mentioned ratio, but by comparing the detections of the measurement levels L2 and L4 and the time (t3-t2) of the interval T23 within a read-only table permanently stored in the memory of the microcontroller 11.

With such a method, it is possible to accurately measure the water flow rate delivered into the tub of the washing machine. A further embodiment of the present invention may be conceived wherein the water flow rate delivered into the tub portion 2b is measured by means of a plurality of successive water level readings carried out by the linear pressure switch 9. In such a case, the water level in the portion 2b can be detected multiple times, e.g. 10 times, corresponding to 10% increments on the water volume to be supplied in the case described with reference to Fig. 2, or 3 times when using the method of the preferred example described with reference to Fig. 3.

In these cases it becomes possible, through the plurality of water level readings and the values of the time elapsing between the readings, to measure the water flow rate over shorter time intervals, while at the same time evaluating any variations thereof over time.

It would also be possible to estimate the quantity of water imbibed in the laundry when the drum surface level 2c is reached, assuming that the water flow rate remains constant through the entire supply step and evaluating the time increase necessary to rise the level in the final supply stages, wherein the laundry items begin to imbibe water, e.g. the time required to deliver the water between the levels corresponding to 90% and 100% of the volume to be supplied. Thus, this information allows to estimate the quantity of water imbibed in the laundry, and can advantageously be used for avoiding the supply of an excessive quantity of water, thereby optimizing the washing of the laundry and avoiding wasting water.

It is apparent that many changes may be made to the present invention by those skilled in the art without departing from the protection scope thereof as stated in the appended claims.

For example, it is clear that the method according to the present invention can also be used for measuring the water flow rate at the outlet of the tub of the washing machine during the drain step.

With suitable technical measures, the present invention is also applicable to different types of washing machines, such as dishwashers.

## Claims

1. A method for measuring the flow rate of water supplied to a washing machine (1), wherein

    - water is supplied into the tub (2, 2b) of the washing machine (1),
    - the reaching of two water levels (12, 13; L2, L4) is detected through a linear pressure switch (9), said two water levels (12, 13; L2, L4) being lower than a predetermined level (2c), said predetermined level (2c) being in particular the bottom surface of the drum (3),
    - a time is measured which is dependent on the reaching of the first one (12, L2) and of the second one (13, L4) of said two levels (12, 13; L2, L4),
    - the water flow rate is calculated as a ratio between a water volume dependent on said two levels (12, 13; L2, L4) and said measured time.

2. A method for measuring the flow rate of water supplied to a washing machine (1) according to claim 1, wherein said first (12) and said second (13) levels are predetermined, and wherein said measured time is the time necessary for the water to go from the first one (12) to the second one (13) of said two levels (12, 13).

3. A method for measuring the flow rate of water supplied to a washing machine (1) according to claim 2, wherein said second level (13) is such that it is reached when in said tub (2, 2b) there is a water volume between 70% and 90%, preferably 80%, of the total water volume to be supplied in order to reach said predetermined level (2c).

4. A method for measuring the flow rate of water supplied to a washing machine (1) according to claim 2 or 3, wherein said first measuring level (12) is such that it is reached when in said tub (2, 2b) there is a water volume between 5% and 20%, preferably 10%, of the total water volume to be supplied in order to reach said predetermined level (2c).

5. A method for measuring the flow rate of water supplied to a washing machine (1) according to claim 1, wherein said measured time is measured through the following steps:

    - starting to measure a supply time (T23) when said pressure switch detects (t2) said first water level (L2),

    - interrupting the measurement of said supply time (T23) when said pressure switch detects (t3) the reaching of a predetermined final control level (L3),
    - adding to said supply time (T23) a predetermined stabilization time (K), preferably such that at least 90% of the water present in the water supply hoses of the washing machine (1) is drained into the tub (2,2b).

6. A method for measuring the flow rate of water supplied to a washing machine (1) according to claim 5, wherein the second level (L4) is detected through the following steps:

    - detecting through said pressure switch (9) the reaching of said predetermined final control level (L3),
    - interrupting (t3) the supply of water into the tub,
    - waiting for a predetermined stabilization time (T34), said stabilization time being preferably such that at least 90% of the water present in the water supply hoses of the washing machine (1) is drained into the tub (2,2b) following said interruption (t3),
    - measuring (t4) said second level (L4).

7. A method for measuring the flow rate of water supplied to a washing machine (1) according to claim 6, wherein the first level (L2) is detected through the following steps:

    - detecting, through said pressure switch (9), the reaching of a predetermined initial control level (L1),
    - interrupting (t1) the supply of water into the tub,
    - waiting for a predetermined stabilization time (T12),
    - measuring (t2) said first level (L2),
    - resuming (t2) the supply of water into the tub.

8. A method for measuring the flow rate of water supplied to a washing machine (1) according to any one of claims 5 to 7, wherein said predetermined initial control level (L1) is such that it is reached when in said tub (2, 2b) there is a water volume between 5% and 20% of the total water volume (2c) to be supplied in order to reach said predetermined level (L5, 2c), preferably equal to 0.1 litres.

9. A method for measuring the flow rate of water supplied to a washing machine (1) according to any one of claims 5 to 8, wherein said predetermined final control level (L3) is such that it is reached when in said tub (2, 2b) there is a water volume between 70% and 90% of the total water volume to be supplied in order to reach said predetermined level (L5, 2c), preferably equal to 0.8 litres.

**10.** A washing machine comprising a tub (2, 2b) adapted to contain water, a valve (5) for allowing said water to enter into said tub (2, 2b), a linear pressure switch (9) for detecting the level of said water in said tub (2b), and a control unit (11) operationally connected to said linear pressure switch (9) and to said valve (5), **characterized in that** said control unit (11) is adapted to implement the method according to any one of claims 1 to 9.

Tav. -1-

Fig. 1

Fig. 2

Tav. -2-

Fig. 3

Europäisches
Patentamt

European
Patent Office

Office européen
des brevets

**EUROPEAN SEARCH REPORT**

Application Number

EP 11 17 5938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 641 609 A1 (LICENTIA GMBH [DE]) 13 July 1990 (1990-07-13) | 1-4,8-10 | INV. G01F1/00 A47L15/42 D06F39/00 D06F39/08 D06F41/00 |
| Y | * the whole document * | 5-7 | |
| Y | DE 30 30 491 A1 (BOSCH SIEMENS HAUSGERAETE [DE]) 25 February 1982 (1982-02-25) * the whole document * | 5-7 | |
| A | EP 2 147 995 A2 (SAMSUNG ELECTRONICS CO LTD [KR]) 27 January 2010 (2010-01-27) * the whole document * | 1-10 | |
| A | DE 42 42 414 A1 (LICENTIA GMBH [DE] AEG HAUSGERAETE GMBH [DE]) 23 June 1994 (1994-06-23) * the whole document * | 1-10 | |

TECHNICAL FIELDS
SEARCHED      (IPC)

G01F
A47L
D06F

The present search report has been drawn up for all claims

| Place of search | Date of completion of the search | Examiner |
|---|---|---|
| Munich | 27 October 2011 | Roetsch, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 17 5938

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2011

| Patent document cited in search report | | Publication date | Patent family member(s) | | Publication date |
|---|---|---|---|---|---|
| FR 2641609 | A1 | 13-07-1990 | DE | 3900705 A1 | 19-07-1990 |
| | | | IT | 1238141 B | 09-07-1993 |
| DE 3030491 | A1 | 25-02-1982 | NONE | | |
| EP 2147995 | A2 | 27-01-2010 | KR | 20100009868 A | 29-01-2010 |
| | | | US | 2010011514 A1 | 21-01-2010 |
| DE 4242414 | A1 | 23-06-1994 | NONE | | |

EPO FORM P0459

For more details about this annex : see Official Journal of the European Patent Office, No. 12/82